# EUROPÄISCHE PATENTSCHRIFT

(11) **EP 1 396 302 B1**
(45) Veröffentlichungstag und Bekanntmachung des Hinweises auf die Patenterteilung: **25.07.2007**
(21) Anmeldenummer: 03103255.0
(22) Anmeldetag: 30.08.2003
(51) Int. Cl.: B23B 49/00, B25F 5/00

(54) **Handwerkzeugmaschine mit Befestigungmittel für einen Tiefenanschlag**
Powered hand tool with fixing means for a depth stop fixing
Machine-outil à main avec moyen de fixation pour butée de profondeur

(30) Priorität: 05.09.2002 DE 10240994
(43) Veröffentlichungstag der Anmeldung: 10.03.2004
(73) Patentinhaber: HILTI Aktiengesellschaft, 9494 Schaan (LI)
(72) Erfinder: Burger, Helmut, 82272, Moorenweis (DE); Schreiber, Wolfgang, 86860, Jengen (DE)
(74) Vertreter: Wildi, Roland

(56) Entgegenhaltungen:
- EP-A- 0 261 386
- AU-B- 462 955
- DE-A- 3 126 245
- US-A- 5 690 451

## Beschreibung

Die Erfindung bezeichnet eine Handwerkzeugmaschine mit Befestigungsmittel für einen axial versetzbar festlegbaren Tiefenanschlag für eine Handwerkzeugmaschine wie einen Bohrhammer.

Eine Handwerkzeugmaschine mit Befestigungsmittel für einen axial versetzbar festlegbaren Tiefenanschlag mit den Merkmalen des Oberbegriffs des Anspruchs 1 ist aus der US 5,690,451 bekannt.

Üblicherweise stabförmig ausgebildete Tiefenanschläge werden in zur Werkzeugachse achsparallelen Stabführungen des Gehäuses der Handwerkzeugmaschine oder eines mit diesem verbindbaren Zusatzhandgriffs axial versetzbar geführt und sind über händisch betätigbare Festlegungsmittel festlegbar.

Ein Tiefenanschlag für eine Handwerkzeugmaschine ist nach der DE3126245 über eine Spannbacke mit einer Flügelschraube, nach der DE2918586 über einen Exzenterhebel, nach der DE10006042 über einen Federschieber, jeweils in einer Stabführung einer Gehäuseauskragung, nach der DE3509199 einer Griffauskragung form- und reibkraftschlüssig befestigt. Die radiale Gehäuseauskragung bzw. Griffauskragung, welche die Stabführung beinhaltet, ragt notwendig radial über die Werkzeugaufnahme heraus, an welcher vorbei sich achsparallel der Tiefenanschlag erstreckt. Falls keine Notwendigkeit der Benutzung des Tiefenanschlags besteht und dieser aus der Stabführung entfernt wird, ist eine derartige stets verbleibende radiale Gehäuseauskragung bzw. Griffauskragung jedoch bei Nutzung in engen Raumbereichen hinderlich. Dies gilt um so mehr für ein verbleibendes zugeordnete Festlegungsmittel.

Nach der US5690451 weist eine Handwerkzeugmaschine ein Befestigungsmittel für einen Tiefenanschlag auf mit einer Stabführung und einem Festlegungsmittel, sowie mit zwei axial versetzten Befestigungsnasen, wobei zur lösbaren Montage des Befestigungsmittels an einem Montageflansch die Befestigungsnasen in zugeordnete Ausnehmungen formschlüssig passend eingreifen.

Die Aufgabe der Erfindung besteht in der Befestigung für einen Tiefenanschlag ohne eine hinderliche, stets verbleibende Gehäuseauskragung bzw. Griffauskragung.

Die Aufgabe wird im Wesentlichen durch die Merkmale der unabhängigen Ansprüche gelöst. Vorteilhafte Weiterbildungen ergeben sich aus den Unteransprüchen.

Im Wesentlichen weist eine Handwerkzeugmaschine mit Befestigungsmittel für einen Tiefenanschlag am Gehäuse oder Zusatzhandgriff einer Handwerkzeugmaschine eine Stabführung, ein Festlegungsmittel, zumindest eine Gehäusebefestigungsnase und zumindest eine axial versetzte Flanschbefestigungsnase auf, welche jeweils in zugeordnete Ausnehmungen der Handwerkzeugmaschine formschlüssig eingreifbar sind.

Durch die Gehäusebefestigungsnase und die Flanschbefestigungsnase ist das Befestigungsmittel für einen Tiefenanschlag zwischen dem Gehäuse und einem Montageflansch lösbar montierbar, indem die Gehäusebefestigungsnase in eine zugeordnete Gehäuseausnehmung und die Flanschbefestigungsnase in eine zugeordnete Flanschausnehmung formschlüssig passend eingreift. Die zur Montage benutzten Flanschsegmentflächen und Ausnehmungen gestatten bei Nichtnutzung des Tiefenanschlags eine Nutzung der Handwerkzeugmaschine in engen Raumbereichen, da keine verbleibenden radialen Gehäuseauskragungen zusätzlichen Freiraum beanspruchen.

Vorteilhaft weist das Befestigungsmittel eine radiale Montagefläche auf, wodurch es durch Flächenkontakt reibkraftschlüssig fixierbar ist, insbesondere durch radiale Verspannung mit einem Flanschspannband.

Vorteilhaft ist die radiale Montagefläche als Innenzylindermantelfläche ausgebildet, wodurch diese mit einem Zylindermantelsegment eines zylinderförmigen Montageflansches flächig kontaktierbar ist.

Vorteilhaft ist die Gehäusebefestigungsnase maschinenseitig axial auskragend, wodurch ein Radialanschlag ausgebildet wird.

Vorteilhaft sind zwei Gehäusebefestigungsnasen, weiter vorteilhaft im Abstand zweier zugeordneter Schraubenkopflöcher für tiefsitzende Schrauben zur gehäuseinternen Befestigung des zylinderförmigen Montageflansches ausgebildet, wodurch das Befestigungsmittel durch zwei Festlegungspunkte drehfestgelegt ist sowie an sämtliche Handwerkzeugmaschinen mit diesem Montageflansch passt.

Vorteilhaft ist die axial versetzte Flanschbefestigungsnase werkzeugseitig radial nach innen auskragend, wodurch ein Axialanschlag ausgebildet wird.

Vorteilhaft weist die Flanschbefestigungsnase einen radialen Hinterschnitt auf, wodurch das Befestigungsmittel mittels eines hintergreifenden Flanschspannbandes des Zusatzhandgriffs durch Spannen, beziehungsweise Festlegen des positionierten Zusatzhandgriffs, radial arretierbar ist.

Vorteilhaft ist das Festlegungsmittel als Flügelschraube ausgebildet, wodurch der in der Stabführung axial versetzbar geführte Tiefenanschlag händisch kraft- und/oder formschlüssig festlegbar ist.

Die Erfindung wird bezüglich eines vorteilhaften Ausführungsbeispiels näher erläutert. Es zeigen:

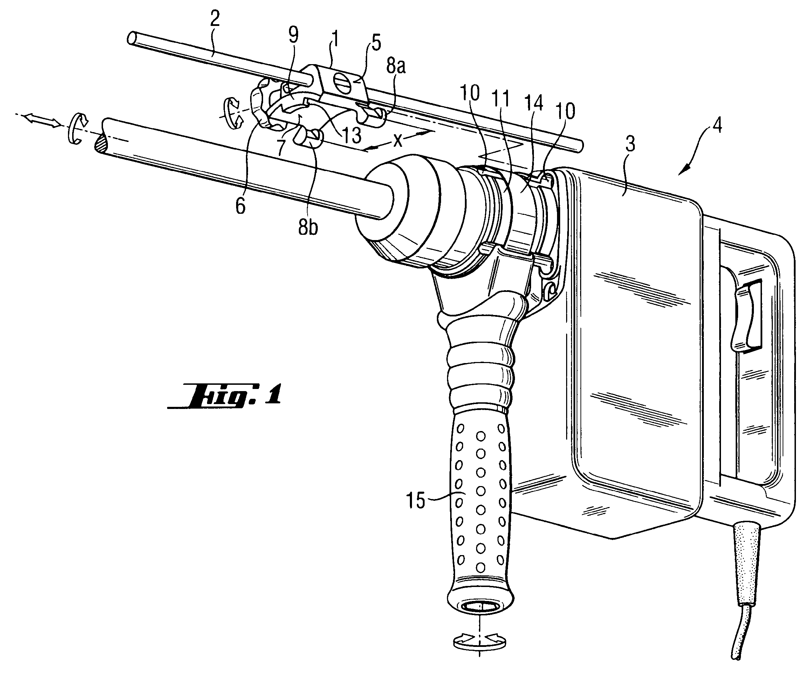

- Fig. 1: Eine erfindungsgemässe Anordnung einer Handwerkzeugmaschine mit einem erfindungsgemässen Befestigungsmittel in einer perspektivischen Explosionsdarstellung; und

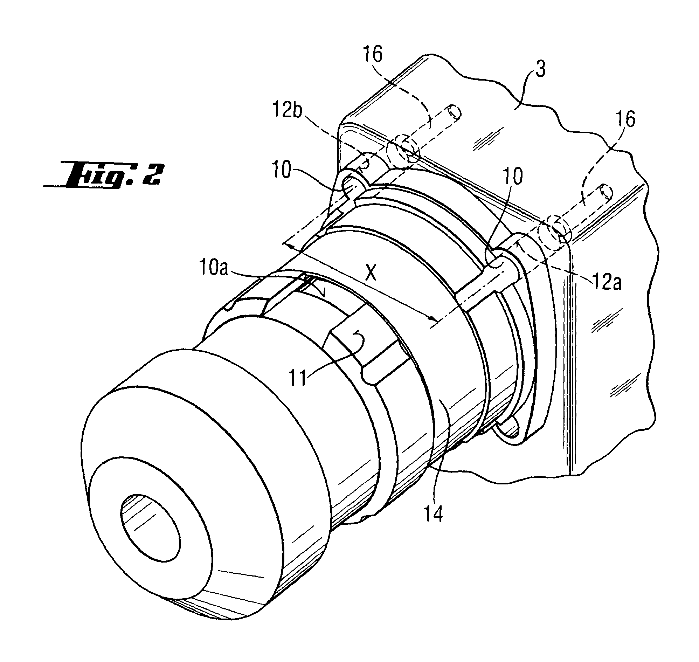

- Fig. 2: den Aufnahmebereich der Handwerkzeugmaschine gemäss Fig. 1 in einer Teilperspektivdarstellung.

Das Befestigungsmittel 1 für einen Tiefenanschlag 2 am Gehäuse 3 einer Handwerkzeugmaschine 4 weist eine Stabführung 5, ein als Flügelschraube ausgebildetes Festlegungsmittel 6, eine als Innenzylindermantelfläche ausgebildete radiale Montagefläche 7, zwei maschinenseitig axial auskragende Gehäusebefestigungsnasen 8a, 8b und eine werkzeugseitig axial versetzte, radial nach innen auskragende Flanschbefestigungsnase 9 auf, welche zu Ausnehmungen 10 und 10a der Handwerkzeugmaschine 4 bzw. eines zylinderförmigen Montageflansches 11 formschlüssig passend eingreifbar ausgebildet sind. Die zwei Gehäusebefestigungsnasen 8a, 8b sind im Abstand X zweier zugeordneter Schraubenkopflöcher 12a, 12b für tiefsitzende Schrauben 16 zur gehäuseinternen Befestigung des zylinderförmigen Montageflansches 11 der Handwerkzeugmaschine 4 ausgebildet. Die Flanschbefestigungsnase 9 greift in die Ausnehmung 10a des Montageflansches 11 derart ein, dass das Befestigungsmittel 1 axial fixiert ist, und weist einen radialen Hinterschnitt 13 auf, welcher zur radialen Fixierung des Befestigungsmittels 1 von einem Flanschspannband 14 eines Zusatzhandgriffs 15 hintergreifbar ist.

## Patentansprüche

1. Handwerkzeugmaschine mit einem Befestigungsmittel (1) für einen Tiefenanschlag (2), welches eine Stabführung (5) und ein Festlegungsmittel (6), sowie zumindest eine Gehäusebefestigungsnase (8a, 8b) und zumindest eine zu dieser axial versetzte Flanschbefestigungsnase (9) aufweist, wobei zur lösbaren Montage des Befestigungsmittels (1) an einem Montageflansch (11) die Gehäusebefestigungsnase (8a, 8b) in eine zugeordnete Gehäuseausnehmung (10) und die Flanschbefestigungsnase (9) in eine zugeordnete Flanschausnehmung (10a) formschlüssig passend eingreifen, **dadurch gekennzeichnet, dass** die Flanschbefestigungsnase (9) einen radialen Hinterschnitt (13) aufweist.

2. Handwerkzeugmaschine mit Befestigungsmittel nach Anspruch 1, **dadurch gekennzeichnet, dass** das Befestigungsmittel (1) eine radiale Montagefläche aufweist.

3. Handwerkzeugmaschine mit Befestigungsmittel nach Anspruch 1 oder 2, **dadurch gekennzeichnet, dass** die radiale Montagefläche (7) als Innenzylindermantelfläche ausgebildet ist.

4. Handwerkzeugmaschine mit Befestigungsmittel nach einem der Ansprüche 1 bis 3, **dadurch gekennzeichnet, dass** die Gehäusebefestigungsnase (8a, 8b) maschinenseitig axial auskragend ist.

5. Handwerkzeugmaschine mit Befestigungsmittel nach Anspruch 4, **dadurch gekennzeichnet, dass** zwei Gehäusebefestigungsnasen (8a, 8b) ausgebildet sind, welche optional im Abstand (X) zweier zugeordneter Schraubenkopflöcher (12a, 12b) für tiefsitzende Schrauben (16) zur gehäuseinternen Befestigung eines zylinderförmigen Montageflansches (11) beabstandet sind.

6. Handwerkzeugmaschine mit Befestigungsmittel nach einem der Ansprüche 1 bis 5, **dadurch gekennzeichnet, dass** die axial versetzte Flanschbefestigungsnase (9) werkzeugseitig radial nach innen auskragend ist.

7. Handwerkzeugmaschine mit Befestigungsmittel nach einem der Ansprüche 1 bis 6, **dadurch gekennzeichnet, dass** das Festlegungsmittel (6) als Flügelschraube ausgebildet ist.

## Claims

1. Hand tool with a fixing means (1) for a depth stop (2), comprising a rod guide (5) and a fastening means (6), as well as at least one housing fixing projection (8a, 8b) and at least one flange fixing projection (9) axially offset relative thereto, the housing fixing projection (8a, 8b) engaging positively in an associated housing recess (10) and the flange fixing projection (9) in an associated flange recess (10a) in order to mount the fixing means (1) removably on a mounting flange (11), **characterised in that** the flange fixing projection (9) has a radial undercut (13).

2. Hand tool with a fixing means according to claim 1, **characterised in that** the fixing means (1) has a radial mounting surface.

3. Hand tool with a fixing means according to claim 1 or claim 2, **characterised in that** the radial mounting surface (7) is designed as an inner cylindrical surface.

4. Hand tool with a fixing means according to one of claims 1 to 3, **characterised in that** the housing fixing projection (8a, 8b) projects axially on the machine side.

5. Hand tool with a fixing means according to claim 4, **characterised by** two housing fixing projections (8a, 8b) optionally spaced apart with the same spacing (X) as two associated screw head holes (12a, 12b) for deep-seated screws (16) for fixing a cylindrical mounting flange (11) inside the housing.

6. Hand tool with a fixing means according to one of claims 1 to 5, **characterised in that** the axially offset flange fixing projection (9) projects radially inwards on the tool side.

7. Hand tool with a fixing means according to one of claims 1 to 6, **characterised in that** the fastening means (6) is designed as a wing screw.

## Revendications

1. Appareil portatif comprenant un moyen de fixation (1) pour une butée de profondeur (2), lequel comporte un guide-tige (5) et un moyen de blocage (6) ainsi qu'au moins un talon de fixation sur carter (8a, 8b) et au moins un talon de fixation sur bride (9), le talon de fixation sur carter (8a, 8b) et le talon de fixation sur bride (9) s'engageant avec ajustement par complémentarité de formes respectivement dans un évidement de carter associé (10) et dans un évidement de bride associé (10a) pour le montage détachable du moyen de fixation (1) sur une bride de montage (11), **caractérisé en ce que** le talon de fixation sur bride (9) comporte une contre-dépouille radiale (13).

2. Appareil portatif avec moyen de fixation selon la revendication 1, **caractérisé en ce que** le moyen de fixation (1) comporte une surface de montage radiale.

3. Appareil portatif avec moyen de fixation selon la revendication 1 ou 2, **caractérisé en ce que** la surface de montage radiale (7) est conformée en surface périphérique de cylindre intérieur.

4. Appareil portatif avec moyen de fixation selon une des revendications 1 à 3, **caractérisé en ce que** le talon de fixation sur carter (8a, 8b) fait saillie axialement côté appareil.

5. Appareil portatif avec moyen de fixation selon la revendication 4, **caractérisé en ce qu'**il est prévu deux talons de fixation sur carter (8a, 8b) qui sont optionnellement espacés selon l'écartement (X) de deux trous à têtes de vis associés (12a, 12b) destinés à des vis encastrées (16) servant à fixer une bride de montage cylindrique (11) à l'intérieur du carter.

6. Appareil portatif avec moyen de fixation selon une des revendications 1 à 5, **caractérisé en ce que** le talon de fixation sur bride décalé axialement (9) fait saillie radialement vers l'intérieur côté outil.

7. Appareil portatif avec moyen de fixation selon une des revendications 1 à 6, **caractérisé en ce que** le moyen de blocage (6) est conformé en vis à ailettes.
